# EUROPEAN PATENT APPLICATION

(11) **EP 0 628 800 A2**
(43) Date of publication of application: **14.12.1994**
(21) Application number: 94304218.4
(22) Date of filing: 10.06.1994
(51) Int. Cl.: G01N 1/00, G01N 35/06

(54) **Apparatus for holding containers of solutions**

(30) Priority: 11.06.1993 US 75029
(71) Applicant: ORTHO DIAGNOSTIC SYSTEMS, INC., Raritan, New Jersey 08869-0606 (US)
(72) Inventor: Frischknecht, Marcel, CH-8635 Oberduernten (CH)
(74) Representative: Mercer, Christopher Paul

(57) **Abstract**

Apparatus for holding containers (176) of solutions, and comprising a rack (102) forming a plurality of openings (120) to hold those containers (176), and a hold down assembly (108) located adjacent the rack (102) and extending thereover to help hold the containers (176) in the rack (102) while solutions are withdrawn therefrom. Preferably, the hold down assembly (108) includes a support subassembly (154) and an arm (156) connected to that subassembly (154) and extending over the rack (102) to limit upward movement of the containers (176) therein. The support subassembly (154) may include a frame (162) and a shaft (164) supported by that frame (162). The arm (156) is connected to a collar (160) that is mounted on the shaft (164), and the position of the collar (160) may be adjusted on the shaft (164) to vary the height of the arm (156). The arm (156) may form one or more through openings (156a,156b) to provide access to containers (176) directly below the arm (156).

## Description

### BACKGROUND OF THE INVENTION

This invention generally relates to apparatus for holding containers of solutions such as medical fluids, and more particularly to such apparatus that are especially well suited for use with automated aspirating assemblies that automatically draw fluids out of those containers.

Many medical testing, diagnostic, and treatment systems or instruments contain a device or station for holding containers of fluids or aqueous solutions. An operator or user will initially place the desired containers in the station, and then withdraw fluids as needed from those containers during the operation of the system. Fluid holding stations of the above-described type are used in blood bank systems or instruments that are used to determine the blood types of blood samples and to test blood samples for various kinds of antigens and antibodies.

Common prior art blood bank systems require an appreciable amount of work and supervision by an operator, and attention has been directed recently to developing fully automated blood bank systems that minimize the amount of work and supervision required of a human operator. In such a fully automated system, a pipette assembly, or similar means, is used to draw fluids from sample solutions, and to dispense those solutions elsewhere in the instrument, such as in a reaction test cassette or in a cell dilution rack.

The design and construction of such a fully automated blood bank system is complicated by the fact that the tops of the containers holding the blood samples are, typically, tightly closed by a cap or rubber stopper. Fluids can be withdrawn from such containers by piercing the container caps or stoppers with the pipette as the pipette is lowered into the container, and then aspirating fluids into the pipette. With this arrangement, however, the pipette may tend to pull the fluid container out of the container holder as the pipette is raised to pull the pipette out of the container. This is because as the pipette is so raised, the pipette frictionally engages the container cap or stopper, and this frictional engagement may cause the cap or container --and thus the entire container-- to move upward with the pipette.

### SUMMARY OF THE INVENTION

An object of this invention is to improve apparatus for holding containers of aqueous solutions.

Another object of the present invention is to provide a station for holding containers of blood samples, and that may be effectively used in a fully automated blood bank instrument.

A further object of this invention is to prevent a pipette from pulling fluid containers out of holders for such containers, when the pipette is raised to pull the pipette out of the containers.

These and other objectives are attained with apparatus for holding containers of solutions, and comprising a rack forming a plurality of openings to hold those containers, and a hold down assembly located adjacent the rack and extending thereover to help hold the containers in the rack while solutions are withdrawn therefrom. Preferably, the hold down assembly includes a support subassembly and an arm connected to that subassembly and extending over the rack to limit upward movement of the containers therein.

The support subassembly may include a frame and a shaft supported by that frame. The arm is connected to a collar that is mounted on the shaft, and the position of the collar may be adjusted on the shaft to vary the height of the arm. The arm may form one or more through openings to provide access to containers directly below the arm. In addition, means are preferably provided to pivot the arm toward and away from the rack.

Further benefits and advantages of the invention will become apparent from a consideration of the following detailed description given with reference to the accompanying drawings, which specify and show preferred embodiments of the invention.

### BRIEF DESCRIPTION OF THE DRAWINGS

Figure 1 is a top plan view of a fluid holding station embodying the present invention.

Figure 2 is a cross-sectional view of the fluid holding station.

Figure 3 is a side view of a hold down assembly of the station shown in Figures 1 and 2.

Figure 4 is a back view of the hold down assembly.

Figure 5 is a top view of the hold down assembly.

Figure 6 is a simplified top plan view of an automated blood analysis instrument using the fluid holding station of Figures 1 through 3.

Figure 7 is a simplified front view of the blood analysis instrument.

Figure 8 is a schematic diagram of the blood analysis instrument.

### DETAILED DESCRIPTION OF THE PREFERRED EMBODIMENTS

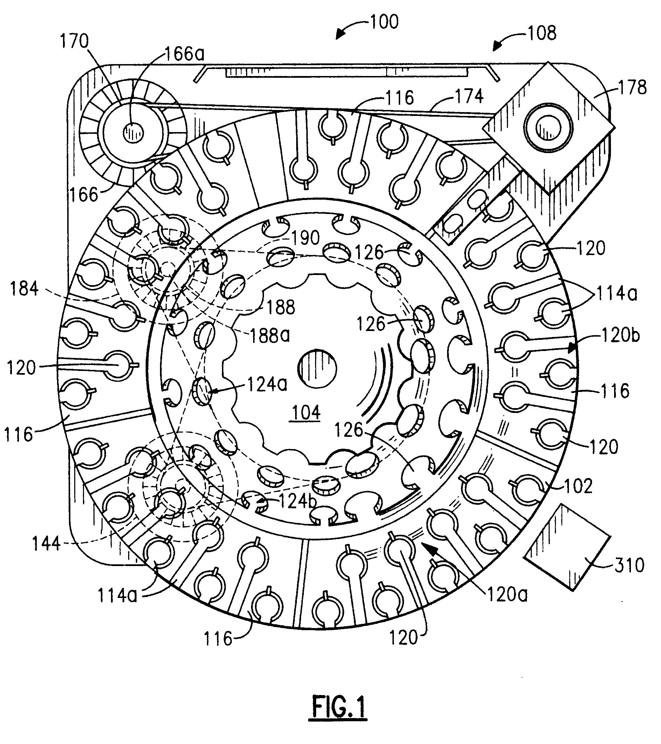

Fluid station 100, generally, comprises sample rack 102, reagent rack 104, drive means 106, and tube hold down assembly 108 and bar code reader 110. More specifically, sample rack 102 includes bottom plate 112 and body 114, and the body includes a multitude of separate segments 116, each of which forms a multitude of container receptacles 120. Reagent rack 104 includes bottom plate 122 and body 124, and this body forms a multitude of container receptacles 126. Drive means 106 includes support shaft 130, drive shaft 132, pulleys 134 and 136, collars 140 and 142, motor means 144, and transmission means 146. Preferably, the motor means is a stepper motor, and transmission means 146 includes pulley 150 and belt 152. Tube hold down assembly 108 includes support subassembly 154, arm 156, and connecting means 160, and preferably this support subassembly includes frame 162 and shaft 164. In addition, as shown in Figure 1, assembly 108 further includes means to pivot shaft 164 and arm 156, and this pivot means includes motor 166, pulleys 170 and 172, and belt 174.

The preferred embodiment of station 100 described herein in detail is particularly well suited for holding containers of blood samples, and these samples are often referred to as solutions. It should be noted that the present invention may be embodied in stations that hold containers of other materials, including other aqueous solution such as urine. Indeed, it is not necessary that the materials held in these containers be a liquid or a fluid; and, thus, the term "solution" as used herein is used in the general sense as any mixture of liquid, gaseous or solid substances.

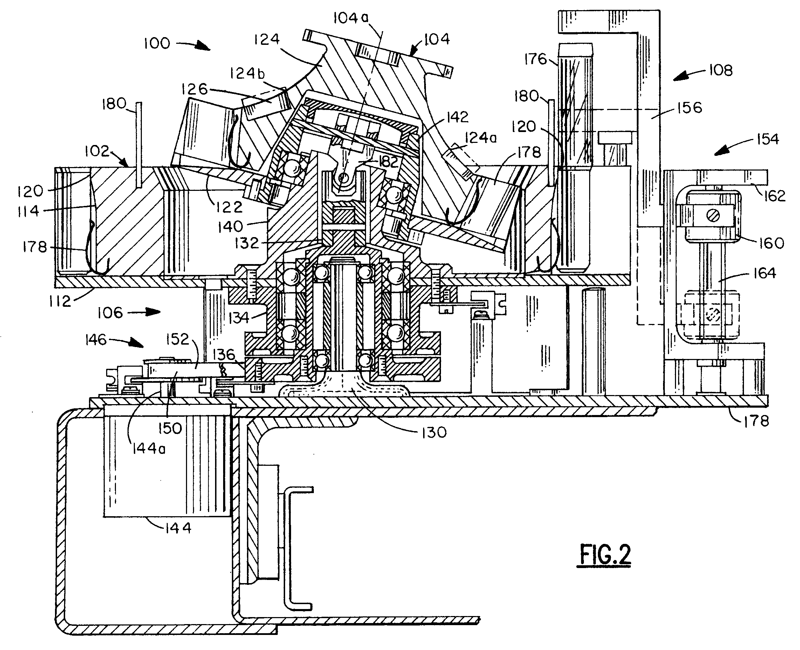

With reference again to Figures 1 and 2, rack 102 is provided for holding a multitude of containers or tubes of blood samples, and preferably these blood sample containers have the general shape of conventional test tubes, as shown at 176. More specifically, bottom plate 112 has a generally flat annular or ring shape, and rack body 114 is supported by and extends upward from bottom plate 112. Each of the segments 116 of rack body 114 has an arcuate shape, including generally planar top and bottom surfaces and generally vertical arcuate outside and inside surfaces. The segments 116, when placed on plate 112, form a generally continuous ring circumferentially extending around the outer portion or perimeter of the plate.

Preferably, each of the segments 116 of rack body 114 is releasably mounted on plate 112, and each rack segment can be removed from and placed in rack 102 independent of the other rack segments. To help hold the rack segments in place in rack 102, preferably the bottom surface of each segment 116 forms one or more recesses or sockets, for example as shown at 316a, that are mounted on mounted protrusions, for example as shown at 312a, that extend upward from plate 312.

In addition, each rack segment 116 has a substantially solid shape and forms a multitude of openings that form receptacles 120. Each opening 120 has a generally cylindrical shape, axially extending completely through the ring segment, to bottom plate 112. The openings 120 are arranged in two concentric circles, an inner circle 120a and an outer circle 120b. The openings in each circle are uniformly spaced around that circle; and the openings are positioned so that, in the circumferential direction, the openings in the inner circle 120a are disposed between the openings 120b in the outer circle. Short or long radial passages 114a extend radially outward from each opening 120, to the outer surfaces of the base segments, allowing or facilitating visual observation of fluids in the containers held in those openings 120. Spring clips 178 may be secured in openings 120 to help hold containers 176 securely therein.

Rack 104 is provided for holding a multitude of containers or vials of reagents, and preferably these containers have the shape of small jars. More specifically, bottom plate 122 is mounted on and extends outward from drive means 106, specifically support collar 140. Plate 122 has a generally flat, annular or ring shape; however, the outer portion of the top surface of bottom plate 122 tapers outwardly downwardly. Body 124 is mounted on and extends upward from plate 122, and body 124 forms a bottom central recess that is shaped and positioned to receive collar 140. Body 124 also forms first and second sets of openings 124a and 124b that form the receptacles 126. Openings 124a are relatively shallow and extend inward from the top surface of body 124, and openings 124b are deeper and preferably extend completely through body 124, to bottom plate 112.

Openings 124a and 124b are arranged on first and second concentric circles, respectively, with the former circle radially located inside the latter circle. The openings in each circle are uniformly spaced around that circle, and each opening 124a is radially aligned with a respective one of the openings 124b. Short radial passages 124c extend radially from openings 124b to the outside surface of body 124, allowing or facilitating visual observation of the fluids in the containers held in those openings. Further, spring clips 178 may also be secured in openings 124b to help secure containers therein.

Preferably, the reagent and sample containers held in station 100 have bar codes to identify the container and to provide other data that may be desired. Bar code reader 110 is located adjacent to the sample and reagent racks 102 and 104 to read the bar codes on the reagent and sample containers. An annular plate 180 having a continuous bar code may be mounted on rack 102, radially inward of the inner circle 120a of openings, and this bar code may be used to identify rack 102. In addition, preferably this bar code is read by reader 110 whenever one of the openings 120 that is empty is moved past the reader, and thus this bar code may be used to indicate that a particular opening 320 does not have a container.

In the operation of fluid station 100, a pipette or similar instrument is lowered into the sample containers held in sample rack 102, fluids are drawn into the pipette and then the pipette is withdrawn upward from the sample container and used to carry the fluids to another location. The tops of the sample containers are often covered with a protective cap or rubber stopper; and as the pipette is lowered into a container, the pipette pierces through the stopper on the container top. Under these circumstances, when the pipette is withdrawn from the container, the pipette may frictionally engage the container stopper and tend to pull the whole container upward and out of the receptacle in which the container is held. Hold down assembly 108 is provided to insure that the pipette does not pull the containers out of the rack 102 as the pipette itself is pulled out of the container.

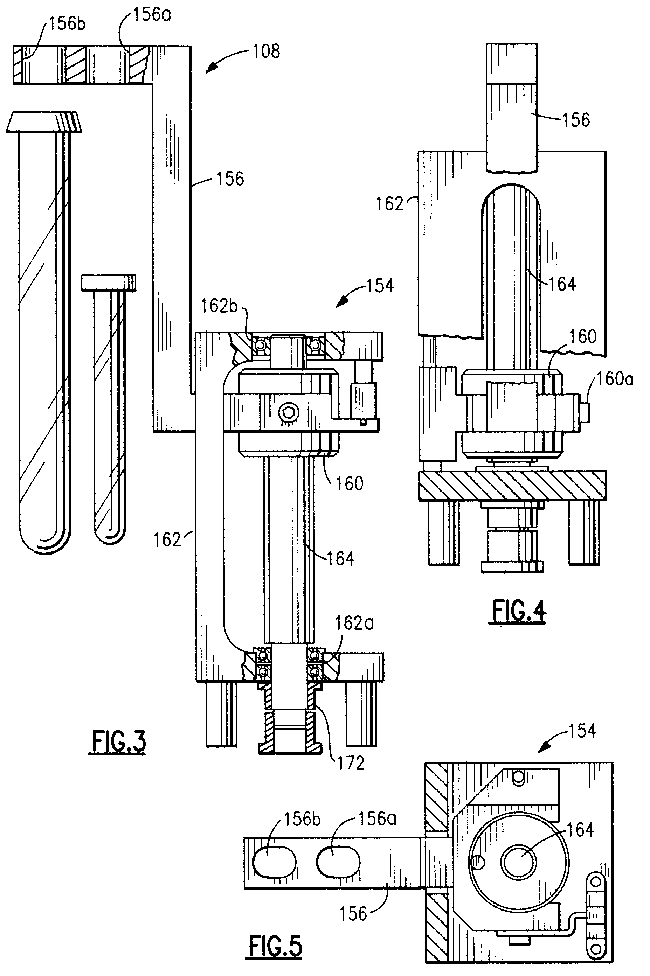

With particular reference to Figures 3-5, support subassembly 154 of assembly 108 is secured to panel 178 and arm 156 is connected to that support subassembly 154 and extends therefrom and over sample rack 102; and with the embodiment of assembly 108 shown in the drawings, arm 156 extends over both circles 120a and 120b of openings 120. Arm 156 forms two through openings 156a and 156b located directly above circles 120a and 120b respectively, and openings 156a and 156b are sized so that they are smaller than the tops of the containers held in openings 120a and 120b respectively.

In the operation of station 100, rack 102 is moved so that a selected sample container is moved into a position, referred to as the aspirate position, directly below one of the openings 156a or 156b of arm 156, and then a pipette is lowered through that one opening in arm 156 and into that selected container. Fluid is drawn into the pipette, and then the pipette is drawn upward, out of the container. If the container is pulled upward with the pipette, arm 156 limits upward movement of the container and prevents the container from being pulled out of the opening 120. If the container strikes arm 156, that arm prevents further upward movement of the container, while the pipette can continue to move upward, out of the container, through the arm opening. Once the pipette is completely withdrawn from the container, the container then drops back into its receptacle in the sample rack 102.

Preferably, the height of arm 156 is adjustable, allowing hold down assembly 110 to be used with sample containers of different heights. More specifically, with the preferred embodiment of assembly 108, support subassembly 154 includes frame 162 and a vertical shaft 164, which is supported by that frame. Mounting bracket or collar 160 is slidably mounted on shaft 164, and arm 156 is connected to that bracket for sliding movement therewith along shaft 164. A screw 160a extends through mounting bracket 160 and engages shaft 164 to releasably hold the mounting bracket in place on the shaft. To adjust the height of arm 156, screw 160a is threaded away from shaft 164, allowing bracket 160 to slide therealong. Bracket 160 is slid along shaft 164 to move arm 156 to a new height; and when arm 156 reaches the desired position, screw 160a is threaded into secure engagement with shaft 164, securing bracket 160 and arm 156 in that new position.

In addition to the foregoing, assembly 108 preferably includes means to pivot arm 156 toward and away from sample rack 102, and this pivot means includes motor 166, pulleys 170 and 172, and belt 174. More particularly, shaft 164 extends downward through a central opening 162a in frame 162, and the shaft is rotatably supported by the frame, and pulley 170 is mounted on a lower portion of the shaft for rotation therewith. Motor 166 is mounted on panel 178 and includes a rotatable motor shaft 166a, and pulley 172 is mounted on shaft 166a for rotation therewith. Belt 174 is drivingly mounted on and extends around pulleys 170 and 172 such that rotation of pulley 172 causes the belt to move between and around the two pulleys 170 and 172. The belt 174 rotates pulley 170 around the axis of shaft 164, and this rotates both shaft 164 and arm 156.

With the embodiment of assembly 108 shown in the drawings, arm 156 has a Z-shape, including upper and lower, generally horizontal portions, and a middle vertical portion connected to and extending between those upper and lower portions. Also, frame 162 has a C-shape, including upper and lower horizontal portions and an intermediate portion extending between those upper and lower portions. Preferably, the upper end of shaft 164 extends into and is rotatably guided in an upper opening 162b formed in the upper horizontal portion of frame 162. Supporting the upper end of shaft 164 in this way helps to maintain the desired axial orientation of the shaft during operation of assembly 108.

With reference again to Figure 2, body 124 of reagent rack 104 defines an axis 104a that is tilted relative to the axis of support shaft 130 and drive shaft 132; and, as viewed in Figure 2, the left end of reagent holder 104 is higher than the right end thereof. As reagent holder 104 rotates, that holder rotates about tilt axis 104a; however, the relative position of the left and right ends of the reagent holder, as viewed in Figure 2, remain the same. Hence, as the reagent holder is rotated, openings 124a and 124b, and any containers held therein, move downward and upward, between the positions of the two openings 124a and 124b shown in Figure 2, as well as around axis 104a.

Drive means 106 is provided to rotate holders 102 and 104, and preferably this drive means also supports both of these holders. More specifically, support shaft 130 is secured to and extends upward from panel 178, and drive shaft 132 is rotatably mounted on support shaft 120, coaxial therewith. Pulley 134 is mounted on and connected to drive shaft 132 for unitary rotation therewith about support shaft 130. Also, pulley 136 is rotatably mounted on drive shaft 132 for relative rotation about the drive shaft, and pulley 134 is connected to rack 104, specifically bottom plate 124 thereof, to rotate rack about the axis of support shaft 130. Support collar 140 is mounted around drive shaft 132, and collar 140 is connected to rack 102, specifically bottom plate 112 thereof, for rotation therewith. Drive collar 142 is mounted on support collar 140 for rotation, independent of collar 140; and drive collar 142 is connected to drive shaft 132, via universal joint 182, so that rotation of the drive shaft rotates collar 142. Drive collar 142 is also connected to bottom plate 322 of rack 104 to rotate that rack with the drive shaft 132. Because drive collar 142 is rotatably mounted on support collar 140, rack 104 can rotate around axis 104a even while collar 140 and 102 are stationary.

Motor 144 and transmission means 146 are provided to rotate drive shaft 132 and, thereby, to rotate rack 104. More specifically, motor 144 is securely connected to panel 178, and includes a rotatable motor shaft 144a. Pulley 150 is mounted on shaft 144a for rotation therewith, and belt 152 is drivingly mounted on pulleys 134 and 150 such that rotation of pulley 150 causes this belt to move between and around pulleys 134 and 150. This causes belt 152 to rotates pulley 134, this rotates drive shaft 132, and this causes drive collar 142 and reagent rack 104 to rotate about tilt axis 104a.

Similarly, motor 184 and transmission means 186 are provided to rotate pulley 136 and sample rack 102. More specifically, motor 184 is securely connected to panel 178 and includes a rotatable motor shaft 184a, and pulley 188 is mounted on motor shaft 184a for rotation therewith. Belt 190 is drivingly mounted on pulleys 188 and 136 such that rotation of pulley 188 causes the belt to move around and between pulleys 188 and 136, and the belt rotates pulley 136; and rotation of pulley 136, in turn, rotates rack 102.

Thus, by selectively actuating motors 144 and 188, both racks 102 and 104 may be rotated simultaneously, or either one of the racks may be rotated independent of the other one of the racks.

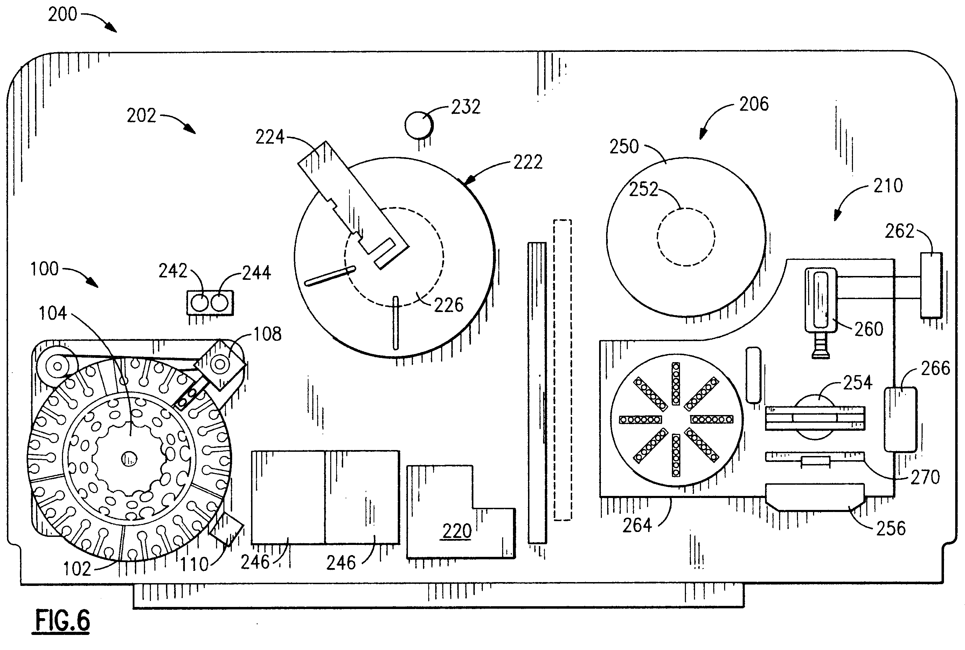

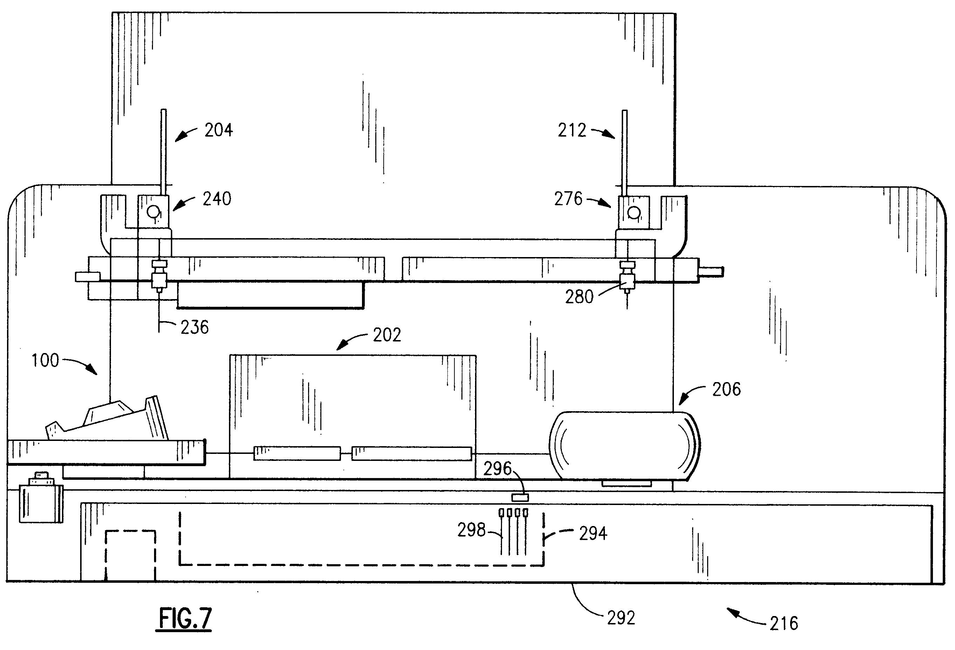

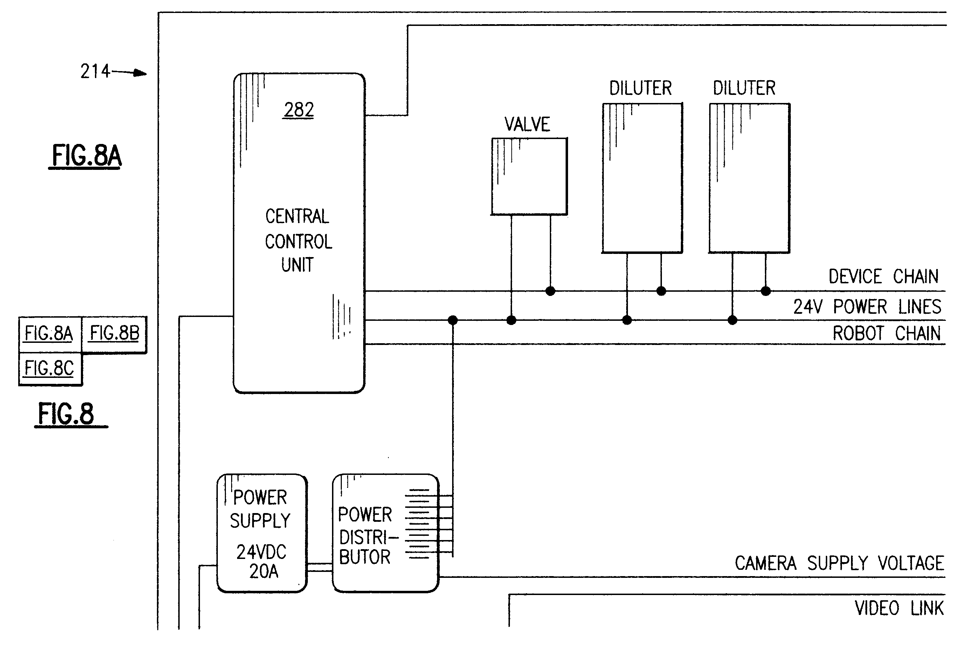

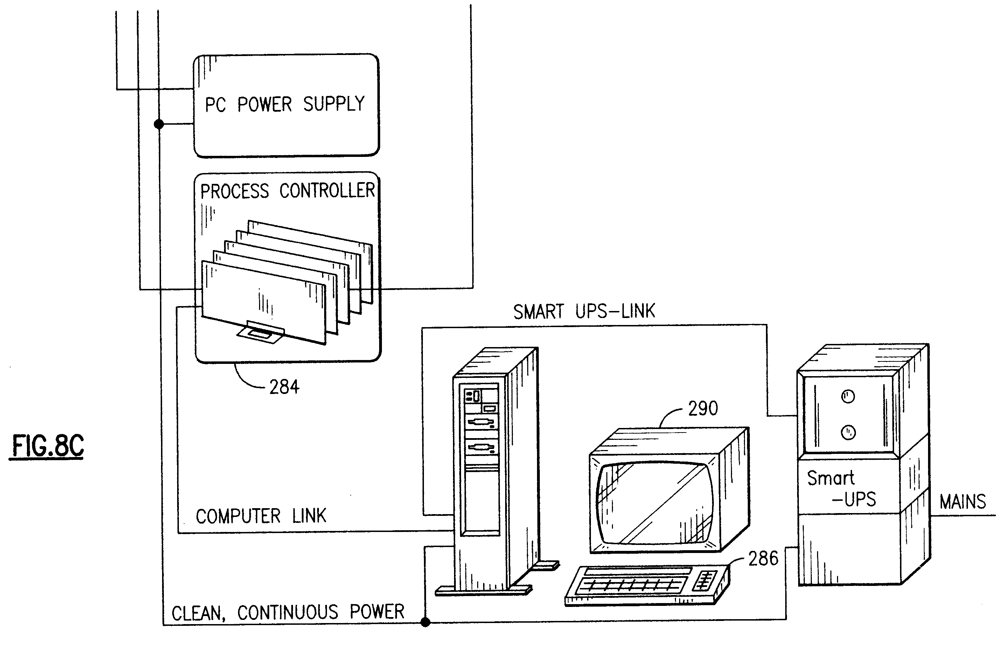

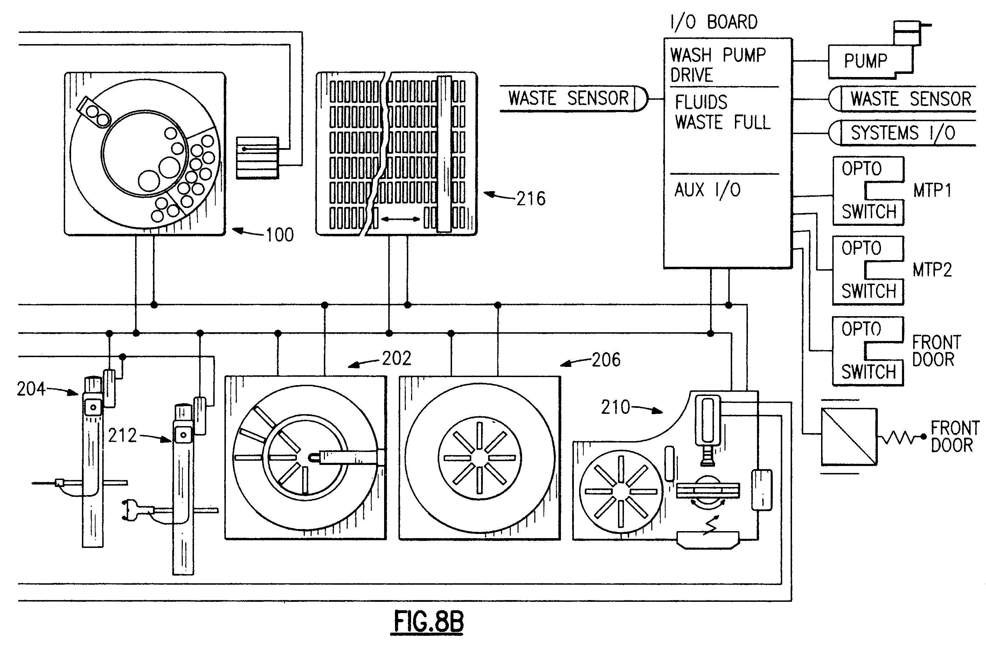

Fluid holding station 100 is particularly well suited for use in an automated solution testing system or instrument; and, for example, Figures 6-8 illustrate a blood analysis system 200 in which station 100 is used.

Blood analysis system or instrument 200 also generally includes incubator station 202, pipette assembly 204, centrifuge 206, analysis station 210, and transport assembly 212; and preferably system 200 further includes control means 214, drawer assembly 216, and a special holding area 220. With the preferred embodiment of system 200 shown in Figures 1-4, incubator station 202 includes cassette rack 222 and piercing assembly 224; and the cassette rack 222 includes first and second sections 226 and 230, and motor 232. Pipette assembly 204 includes pipette 236 and robot arm 240, and preferably this assembly also includes shallow and deep wash areas 242 and 244 and a pair of cell dilution racks 246. Centrifuge 206 includes rotor 250 and motor 252; and analysis station 210 includes holding means 254, illumination means 256, imaging subsystem 260, processing subsystem 262, storage rack 264, waste receptacle 266, and transport subsystem 270. Transport assembly 212 includes robot arm 276 and gripper 280; control means 214 includes central control unit 282, process controller 284, keyboard 286, and keyboard terminal 290; and drawer assembly 216 includes drawer 292, slide tray 294, and sensor bar 296.

System 200 is described in detail in contemporaneously filed patent application No. for "An Automated Blood Analysis System," the disclosure of which is herein incorporated by reference (claiming priority from USSN 075 303, Attorney's reference P12278EP). Generally, incubation station 202 is provided for holding containers or receptacles while reagents and fluids are being dispensed in those containers, and, if desired, for incubating the containers. Station 100, as discussed above, is provided for holding blood samples and a plurality of reagents, and pipette assembly 204 is provided for transferring fluids from station 100 to the containers in incubation station 202. Centrifuge 206 is provided for centrifuging the containers, and analysis station 210 is provided to analyze the containers to identify reactions therein. Transport assembly 212 is provided to carry the containers between incubator station 202, centrifuge 206, and analysis station 210. Drawer assembly 216 is provided for holding a supply of the containers that are used in instrument 200, and preferably assembly 216 holds a supply of each of a multitude of types of containers that are used in instrument 200.

Control means 214 is connected to pipette assembly 204 and to transport assembly 212. The control means operates the pipette assembly to draw blood and reagents from station 100, and to dispense blood and reagents into containers held in incubation station 200 to produce predetermined solutions therein. The control means also operates transport assembly 212 to carry containers from drawer assembly 216 to the incubator station, to carry containers from the incubator station to centrifuge 206 after the predetermined solutions have been produced in the containers and then to carry the containers from the centrifuge to analysis station 210.

In the operation of instrument 200, a cassette 298 is moved in drawer assembly 216 to a position where gripper 280 of transport assembly 212 has access to the cassette, and then the gripper picks up the cassette and, preferably, moves the cassette in front of a bar code reader. The bar code reader verifies, for example, that the cassette is properly oriented, that the proper cassette has been removed from the drawer assembly.

If the checks made by the bar code reader show that the cassette is acceptable, then the gripper places the cassette into incubator rack 222, and the incubator positions the cassette beneath piercing assembly 224. That assembly 224 operates to pierce openings in the top of the cassette, and then the incubator moves the cassette to a position where pipette 236 is able to dispense fluids into the cassette. The pipette is then operated to draw fluids from reagent and sample racks 102 and 104 and to deposit the appropriate reagents and samples into the cassettes. After this, the cassette may be incubated, and the cassette is carried by gripper 280 to centrifuge 206 and deposited therein. If necessary, a balance cassette may also be placed in the centrifuge by the gripper. The centrifuge then spins the cassette, first for two minutes at 55 gs and then for three minutes at 199 gs.

At the end of the spin, gripper 280 removes the cassette from centrifuge 206 and places the cassette in storage rack 264 of analysis station 210, and this storage rack then positions the cassette immediately adjacent the cassette holder 254. Transport subsystem 270 transfers the cassette from rack 272 to holder 254, and an image of the cassette, or pertinent portions thereof, is produced on imaging subsystem 260. A digitized image of the cassette, or the pertinent portions thereof, is obtained, and the digitized data is processed to determine if a reaction occurred in the cassette and, if so, to classify the reaction. If analysis station 210 can adequately grade the reaction, then the cassette is moved into waste receptacle 266. However, if the cassette reaction is not readable, then the cassette is placed into holding area 220, to be read by the user.

While it is apparent that the invention herein disclosed is well calculated to fulfill the objects previously stated, it will be appreciated that numerous modifications and embodiments may be devised by those skilled in the art, and it is intended that the appended claims cover all such modifications and embodiments as fall within the true spirit and scope of the present invention.

## Claims

1. Apparatus for holding containers of solutions, comprising:
a rack forming a plurality of openings to hold containers of solutions; and
a hold down assembly located adjacent the rack and extending thereover, to help hold the containers in the rack while solutions are withdrawn from the containers.

2. Apparatus according to Claim 1, wherein the hold down assembly includes:
a support subassembly;
an arm extending over the rack to limit upward movement of the containers; and
means connecting the arm to the support subassembly.

3. Apparatus according to Claim 2, wherein the connecting means includes means to connect the arm to the support subassembly at each of a plurality of locations to allow the height of the arm to be adjusted.

4. Apparatus according to Claim 3, wherein:
the support subassembly includes
i) a frame, and
ii) a shaft supported by the frame; and
the connecting means includes
i) a collar mounted on the shaft, and
ii) means releasably securing the collar to the shaft to allow the collar to slide along the shaft.

5. Apparatus according to any one of Claims 2 to 4 wherein the hold down assembly further includes means to pivot the arm away from the rack.

6. Apparatus according to Claim 5, wherein: the support subassembly includes
i) a frame, and
ii) a shaft supported by the frame;
the connecting means connects the arm to the shaft; and
the pivot means is connected to the shaft to pivot the shaft and the arm toward and away from the rack.

7. Apparatus according to Claim 6, wherein:
the pivot means includes
i) motor means, and
ii) transmission means connecting the motor means to the shaft; and
the motor means is selectively operated to pivot the shaft.

8. Apparatus according to Claim 7, wherein the frame includes
i) a lower portion forming a first opening, and
ii) an upper portion forming a second opening;
and
the shaft extends into and is rotatably guided in both of said first and second openings.

9. Apparatus according to any one of Claims 2 to 9, wherein the arm forms a through opening to provide access to containers below the arm.

10. Apparatus according to any one of Claims 2 to 9, wherein:
the rack is supported for rotary movement; and further including
i) motor means connected to the rack to rotate the rack, and
ii) control means connected to the motor means to operate the motor means to rotate the rack to move a predetermined one of the openings in the rack to a position directly beneath the arm of the hold down assembly.

11. Apparatus for holding containers of solutions, comprising:
a base;
a rack including a plurality of separable rack sections, each of the rack sections being mounted on the base and forming a plurality of openings to hold containers of solutions;
means releasably connecting each of the rack sections to the base; and
drive means connected to the base to rotate the base and the rack.

12. Apparatus according to Claim 11, wherein:
the means connecting the rack sections to the base including a plurality of protrusions connected to and extending upward from the base; and
each of the rack sections includes a surface forming a recess mounted on one of said protrusions.

13. Apparatus according to Claim 12, wherein:
each of the rack sections has an arcuate shape; and
the rack sections form an annulus on the base.

14. Apparatus for holding containers of solutions comprising:
a rack forming a plurality of openings to hold containers of solutions; and
a hold down assembly located adjacent the rack, and including
i) a support frame,
ii) a shaft supported by the frame,
iii) an arm extending over the rack to help hold the containers therein while solutions are withdrawn from the containers,
iv) a collar connected to the arm and mounted on the shaft, and
v) means releasably connecting the collar to the shaft to allow the collar to slide along the shaft to adjust the height of the arm.

15. Apparatus according to Claim 14, wherein the hold down assembly further includes means connected to the shaft to pivot the arm toward and away from the rack.

16. Apparatus according to Claim 14 or claim 15, wherein the rack includes
a base;
a plurality of separable rack sections, each of the rack sections being mounted on the base and forming a plurality of openings to hold the containers; and
means releasably connecting each of the rack sections to the base.
